# EUROPEAN PATENT APPLICATION

(11) **EP 1 337 026 A1**
(43) Date of publication of application: **20.08.2003**
(21) Application number: 03394019.8
(22) Date of filing: 14.02.2003
(51) Int. Cl.: H02J 7/00, H04M 1/04

(54) **A battery charging device**

(30) Priority: 14.02.2002 IE 20020113
(71) Applicant: The Haehnel Partnership, Sundays Well, Cork (IE)
(72) Inventor: Haehnel, Michael, Carrigaline, County Cork (IE); Haehnel, Christian, Monkstown, County Cork (IE)
(74) Representative: Weldon, Michael James

(57) **Abstract**

A battery charging device (1) has a housing (2) with a modular insert (6) chosen for a battery type. A cover (3) has a base wall (5) and ribs (8) to form a socket together with the insert (6) when the cover is open. When open, the cover (6) is held on a stable position by snap-fitting interconnection of a resilient catch (11) in a groove (12).

## Description

### Field of the Invention

The invention relates to a charging device for charging re-chargeable batteries for consumer appliances such as digital cameras or camcorders.

### Prior Art Discussion

It is known to provide a battery charging device, in which there is a seat for supporting a battery. For example, United States Patent Specification No. US5254927 describes a charger in which an upper surface acts as a seat for a battery being charged. Also, GB2348058A and US4629962A describe charging devices having drawers for accommodating a battery.

The invention is directed towards providing a charging device which is more convenient for the user and/or more versatile.

### SUMMARY OF THE INVENTION

According to the invention, there is provided a battery charging device comprising a housing containing a charging circuit, a connector for connection with a power supply, and charging terminals,
characterised in that,
the device comprises a cover for covering the charging terminals;
the cover and the housing are configured to form a socket to receive and retain a battery in electrical contact with the terminals; and
the cover is hinged to the housing for movement between a closed position covering the terminals and an open position to form the socket together with the housing.

In one embodiment, the cover is connected to the housing by a hinge comprising a catch and a receiver for snap-fitting engagement at stable open and closed positions of the cover.

In another embodiment, the receiver comprises a pair of spaced-apart grooves.

In a further embodiment, the cover comprises a pair of opposed side walls, and each of said side walls comprises a cover hinge part.

In one embodiment, the housing comprises a modular interchangeable insert for cooperation with the cover to form the socket.

In another embodiment, the insert comprises a base and a pair of side walls, and the side walls overlap the side walls of the cover when the cover is closed.

In a further embodiment, the base of the insert is substantially parallel with formations of the cover when the cover is open.

In one embodiment, the housing comprises front and rear casing parts, and the insert comprises means for connection with the front part.

In another embodiment, the front casing part comprises an opening bounded by side walls for engagement with the insert.

In a further embodiment, the housing is shaped to be free-standing or connected to a mains socket with the cover hinged to the housing at its upper end, and housing and the cover are configured to receive and retain a battery dropped into the socket.

In one embodiment, the electrical terminals are in a lower end of the insert for-retention of electrical contact with a battery in place under gravity.

In another aspect, the invention provides a method of manufacturing a charging device as described above in any embodiment, comprising the steps of selecting a modular insert of one of a range of insert types and connecting the selected insert to the remainder of the housing.

### Detailed Description of the Invention

The invention will be more clearly understood from the following description of some embodiments thereof, given by way of example only with reference to the accompanying drawings in which:-
Figs. 1 and 2 are perspective views of a charging device of the invention in open and closed positions respectively;
Fig. 3(a) is a perspective view from above of the device, showing a socket for a battery and Fig. 3(b) is a diagrammatic cross-sectional view showing a battery in place;
Fig. 4 is an exploded view of the device showing a cover, a modular insert, a front casing part, and a rear casing part;
Fig. 5 is another exploded view showing the insert and a cover in more detail;
Fig. 6 is a diagrammatic perspective view showing a hinge for the cover in more detail; and
Fig. 7 is a perspective view from above of an alternative charging device of the invention, provided by inserting a different modular socket during manufacture.

### Description of the Embodiments

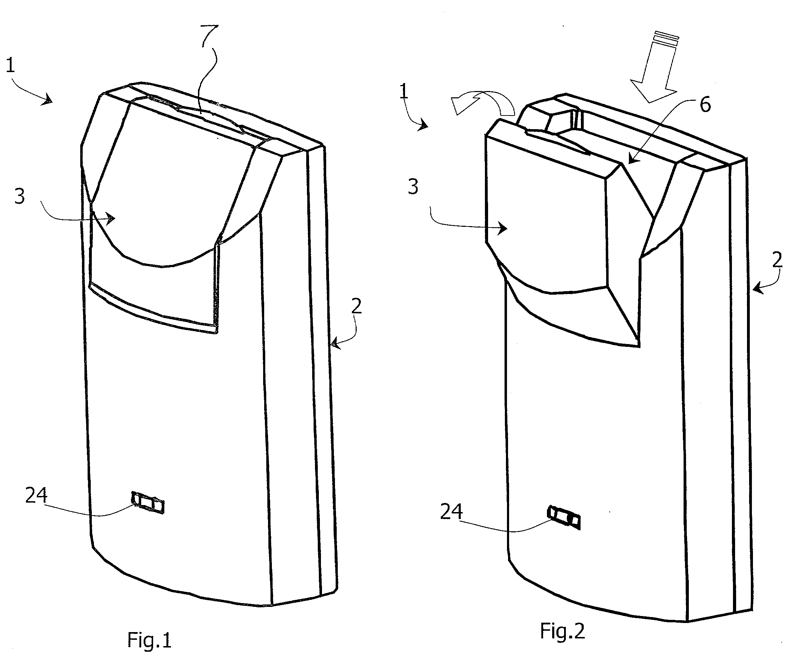

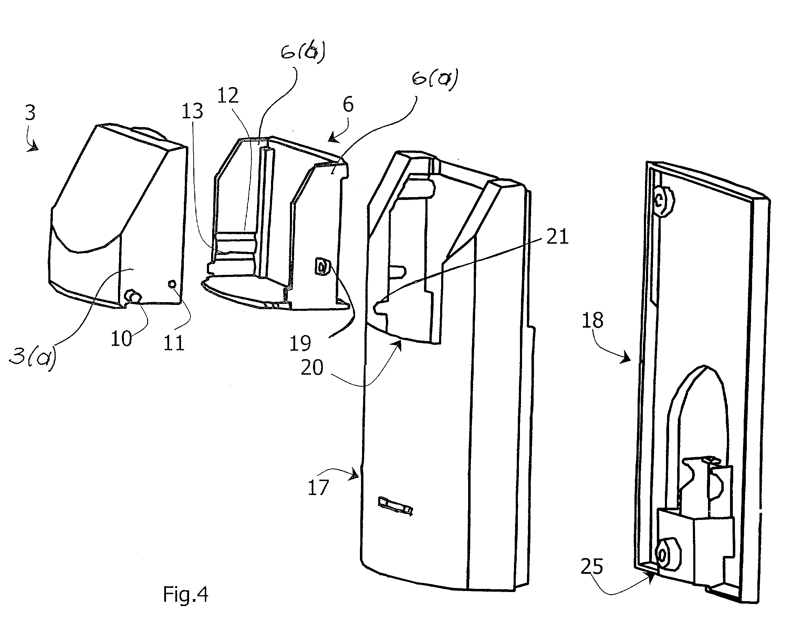

Referring to Figs. 1 to 5 a battery charging device 1 comprises a housing 2 and a hinged cover 3. The outer surface of the cover 3 conforms to the outer shape and configuration of the housing 2, having a sloped or tapered top section where the overall device 1 narrows towards the top. The cover 3 comprises a slightly raised and curved handle 7 for easy gripping by a user. The rear of the device 1 (not visible in the drawings) comprises pins for insertion in a mains socket to receive mains power. An internal support 25 for the pins is shown in Fig. 4. The housing 2 contains charging circuits, not shown, connected to these pins.

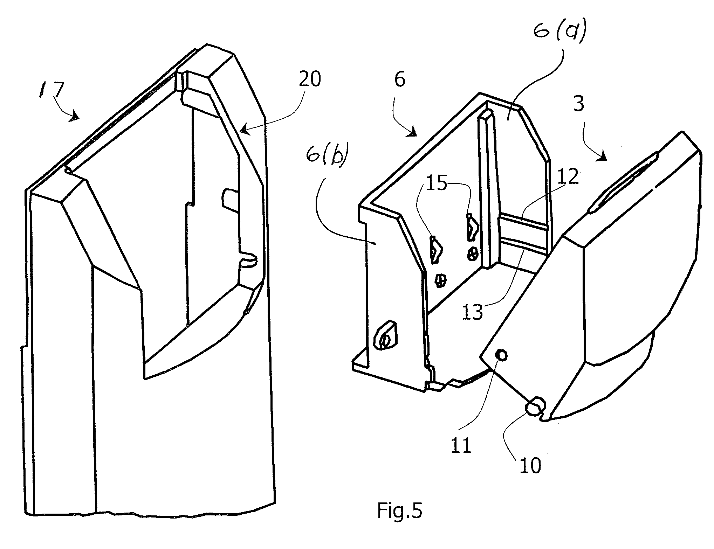

The cover 3 comprises a flat base 5 which is horizontal when the device 1 is upright, either free-standing or plugged into a mains socket. It also comprises inner guide ribs 8 which are vertical when the device is upright. As shown most clearly in Figs. 4 and 5 the housing 2 comprises a front casing section 17, a rear casing section 18, and a modular interchangeable terminal insert 6. The insert 6 comprises tabs 19 for connection to the front casing section 17 when placed in an opening 20.

Also, the cover 3 comprises a pair of opposed hinge pins 10 for snap-fitting engagement with receivers 21 in the front casing section 17.

The insert 6 comprises a pair of angled spring-loaded electrical terminals 15 for electrical connection with battery terminals for charging. On the inside, the terminals 15 are electrically connected to the charging circuit.

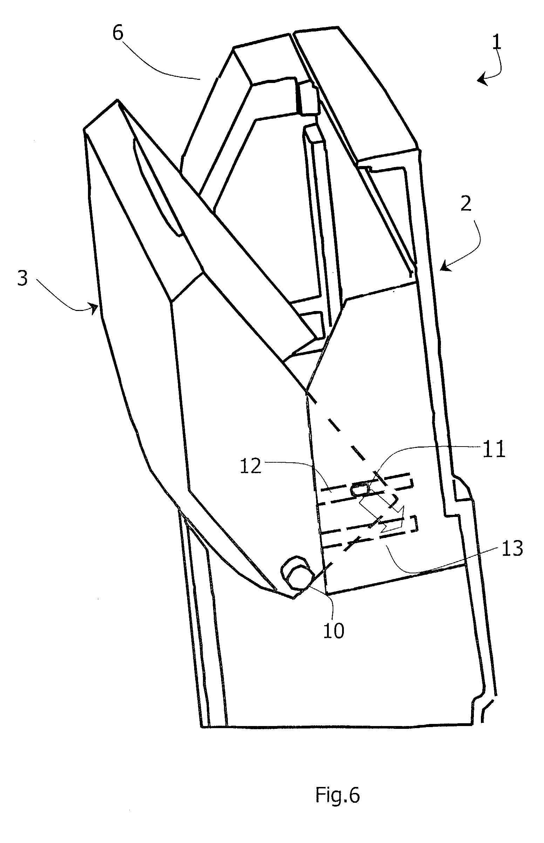

As shown most clearly in Figs 5 and 6, the insert 6 has a pair of side walls 6(a) and 6(b) for engagement with a corresponding pair of side walls 3(a) and 3(b) of the cover 3. Each of the insert's side walls 6(a) and 6(b) has a pair of "horizontal" grooves 12 and 13. A curved catch 11 is incorporated in the outer surface of each cover side wall 3(a) and 3(b). The resilient nature of the cover's side walls allows the catch 11 to snap fit into one of the grooves, engagement with the lower groove 13 being for the closed position and with the groove 12 being for the open position.

In use, the cover 3 is closed to allow convenient and compact storage or transport of the device 1 without contamination of the electrical terminals 15. When the cover 3 is closed the overall device 1 shape is compact and streamlined, the cover 3 conforming with the overall tapered shape at the top.

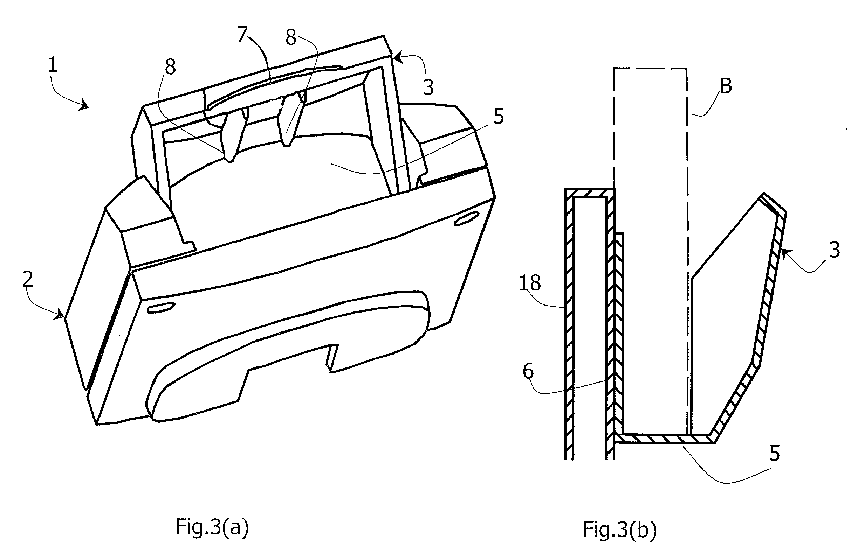

To re-charge a battery B, the cover 3 is opened to its open stable position provided upon engagement of the catch 11 in the upper groove 12. At this position the ribs 8 are parallel with the base (web) of the insert 6. As shown most clearly in Figs. 3(a) and 3(b) the ribs 8, the cover side walls 3(a) and 3(b) and base 5, and the base of the insert 6 form a mechanical or physical socket into which the battery B may be dropped. The snap-fitting hinge arrangement of the cover 3, the configuration of the cover 3 and of the insert 6 and the weight of the battery allow convenient and effective retention of the battery B in good electrical contact with the terminals 15. An LED 24 in the front of the device 1 indicates that charging is in progress when the device 1 is connected to the mains. When charging is finished the battery B is simply lifted out and the cover 3 is closed.

Because the socket is open at the top, batteries of a range of different lengths may be accommodated. Also, there is a clear visible indication that the device 1 is in the process of charging as the battery is proud of the housing.

The insert 6 is interchangeable during manufacture to allow configuration of the device 1 for use with a selected battery type. This is achieved by simply connecting a selected insert at its tab 19.

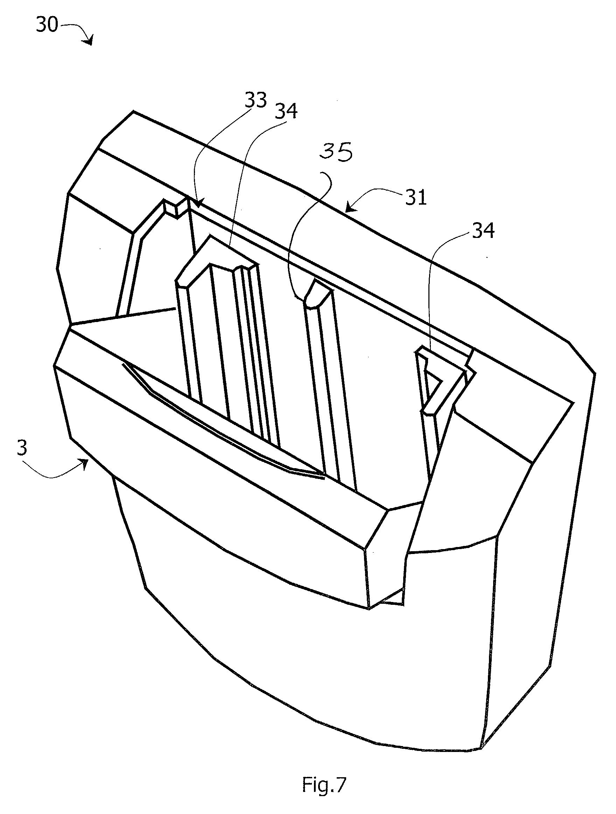

As an example, an alternative charging device 30, shown in Fig. 7, comprises an insert 33 having side ribs 34 and a central rib 35 to receive two parallel narrow rechargeable batteries. This is only one example, and it will be appreciated that a range of different insert configurations may be used.

It is envisaged that the insert 6 could be modified so that is also interchangeable by the user.

It will be appreciated that the invention provides for excellent protection of charging electrical terminals and also convenient and stable holding of the battery. A single part (the cover) has a dual functions of protecting the terminals and of providing part of the battery socket, thus allowing the device to be compact. Further because the battery is retained with good physical support in the socket, the risk of damage to the battery is minimised. This support is enhanced by the overlapping configuration of the cover and insert side walls.

The invention is not limited to the embodiments described but may be varied in construction and detail. For example, the production method may involve selection of a cover to configure the device for a particular battery type. This selection may be instead of or in addition to selection of an insert.

## Claims

1. A battery charging device (1) comprising a housing (2) containing a charging circuit, a connector for connection with a power supply, and charging terminals (15),
**characterised in that**,
the device comprises a cover (3) for covering the charging terminals;
the cover (3) and the housing (2, 6) are configured to form a socket to receive and retain a battery (B) in electrical contact with the terminals (15); and
the cover is hinged to the housing for movement between a closed position covering the terminals (15) and an open position to form the socket together with the housing.

2. A battery charging device as claimed in claim 1, wherein the cover is connected to the housing by a hinge comprising a catch (11) and a receiver (12, 13) for snap-fitting engagement at stable open and closed positions of the cover.

3. A battery charging device as claimed in claim 2, wherein the receiver comprises a pair of spaced-apart grooves (12, 13).

4. A battery charging device as claimed in claims 2 or 3, wherein the cover (3) comprises a pair of opposed side walls (3(a), 3(b)), and each of said side walls comprises a cover hinge part (11).

5. A battery charging device as claimed in any preceding claim, wherein the housing (2) comprises a modular interchangeable insert (6) for cooperation with the cover (3) to form the socket.

6. A battery charging device as claimed in claim 5, wherein the insert (6) comprises a base and a pair of side walls (6(a), 6(b)), and the side walls overlap the side walls (3(a), 3(b)) of the cover when the cover (3) is closed.

7. A battery charging device as claimed in claim 6, wherein the base of the insert (6) is substantially parallel with formations (8) of the cover (3) when the cover is open.

8. A battery charging device as claimed in any of claims 5 to 7, wherein the housing comprises front (17) and rear (18) casing parts, and the insert (6) comprises means for connection with the front part (17).

9. A battery charging device as claimed in claim 8, wherein the front casing part (17) comprises an opening (20) bounded by side walls for engagement with the insert (6, 33).

10. A battery charging device as claimed in any preceding claim, wherein the housing is shaped to be free-standing or connected to a mains socket with the cover hinged to the housing at its upper end, and the housing (2) and the cover (3) are configured to receive and retain a battery dropped into the socket.

11. A battery charging device as claimed in claim 10, wherein the electrical terminals (15) are in a lower end of the insert for retention of electrical contact with a battery in place under gravity.

12. A method of manufacturing a charging device as claimed in any of claims 5 to 11 comprising the steps of selecting a modular insert (6, 33) of one of a range of insert types and connecting the selected insert to the remainder of the housing.
